**Europäisches Patentamt**

**European Patent Office**

**Office européen des brevets**

(19)

(11) Veröffentlichungsnummer : **0 147 440 B2**

(12) ## NEUE EUROPÄISCHE PATENTSCHRIFT

(45) Veröffentlichungstag der neuen Patentschrift :
**22.12.93 Patentblatt 93/51**

(51) Int. Cl.⁵ : **B23K 35/30,** C23C 4/06,
C22C 19/05

(21) Anmeldenummer : **84902331.2**

(22) Anmeldetag : **20.06.84**

(86) Internationale Anmeldenummer :
**PCT/CH84/00101**

(87) Internationale Veröffentlichungsnummer :
**WO 85/00127 17.01.85 Gazette 85/02**

(54) **PULVERFÖRMIGER SPRITZWERKSTOFF AUF NICKEL-CHROM-BASIS.**

(30) Priorität : **28.06.83 CH 3532/83**

(43) Veröffentlichungstag der Anmeldung :
**10.07.85 Patentblatt 85/28**

(45) Bekanntmachung des Hinweises auf die
Patenterteilung :
**08.04.87 Patentblatt 87/15**

(45) Bekanntmachung des Hinweises auf die
Entscheidung über den Einspruch :
**22.12.93 Patentblatt 93/51**

(84) Benannte Vertragsstaaten :
**AT BE CH DE FR GB LI LU NL SE**

(56) Entgegenhaltungen :
EP-A- 31 580
EP-A- 0 011 649
FR-A- 1 280 979
FR-A- 1 492 538
FR-A- 2 285 956
US-A- 3 743 533

(56) Entgegenhaltungen :
Automatic Welding, Jahrgang 30, Nr. 5, Mai
1977, I. I. Frumin u.a.: "Development of a
heat-resistant chromium-nickel steel for surfacing sealing faces in power fittings", Seiten
30-33
O. Knotek et al., "Hartlegierungen zum Ver-
schleiss-Schutz", Seiten 77-79, Verlag Stahleisen mbH, Düsseldorf, 1975
Metallwissenschaft und Technik, 34. Jahrgang, Heft 8, August 1980, Seiten 711-715
DIN 32 529, Dez. 1983

(73) Patentinhaber : **Castolin S.A.**
**CH-1025 Saint-Sulpice (CH)**

(72) Erfinder : **SIMM, Wolfgang**
**Chemin de Ruchoz**
**CH-1024 Ecublens (CH)**
Erfinder : **STEINE, Hans-Theo**
**5, chemin de la Plaine**
**CH-1022 Chavannes (CH)**

(74) Vertreter : **Hranitzky, Wilhelm Max et al**
**c/o WILLIAM BLANC & CIE 9, rue du Valais**
**CH-1202 Genève (CH)**

**EP 0 147 440 B2**

## Beschreibung

Die Erfindung betrifft einen pulverförmigen, eine selbstfliessende Legierung auf Nickel-Chrom-Basis aufweisenden Spritzwerkstoff zur Herstellung von erosions-korrosions- und oxydationsbeständigen Schutzschichten durch thermisches Spritzen und Einschmelzen.

Die bekannten auf dem Markt befindlichen Spritzwerkstoffe dieser Art weisen Nickel-Chrom-Basis-Legierungen mit Chromgehalten zwischen 0,5 und 17,0 Gewichtsprozent auf. Der Anwendungsbereich solcher Hartlegierungs-Werkstoffe liegt in der Erzeugung von sehr verschleissfesten Schutzschichten, die Korrosions- und Oxydationsbelastungen aussetzbar sind.

Es hat sich jedoch herausgestellt, dass die Oxydationsbeständigkeit solcher Schutzschichten nur bis Temperaturen von maximal 600-700°C einigermassen ausreichend ist und dass ferner bei zusätzlichem Korrosionsangriff durch Gase bereits im Bereich von über 400°C die Lebensdauer der Schichten sehr rasch absinkt und den heutigen Anforderungen nicht mehr genügt.

Aufgabe der Erfindung ist es, die Temperaturbelastbarkeit von mit dem eingangs genannten Spritzwerkstoff hergestellten Schutzschichten zu erhöhen, und gleichzeitig eine sehr gute Erosions- und/oder Korrosions- und/oder Oxydationsbeständigkeit zu erzielen.

Dies wird erfindungsgemäss dadurch erreicht, dass die Legierung, die er aufweist, in Gewichtsprozent folgende Zusammensetzung besitzt:

C 0,01 - 2,0

Fe 0,1 - 25,0 mit Ausnahme des Bereiches

von 1,5 - 6

B 0,5 - 4,5

Si 0,6 - 5,5

Cr 20,0 - 28,0

Nb bis zu 2,0

Mo bis zu 15,0

Ni Rest,

wobei der Borgehalt, mit einer maximalen Abweichung von $\pm$ 10 %, jeweils 75 % des Siliziumgehaltes beträgt.

Es wurde überraschenderweise festgestellt, dass sich unter bestimmten Bedingungen eine wesentliche Verbesserung der Temperaturbeständigkeit erreichen lässt, wenn der Chromgehalt der Legierung über die üblichen Grenzen hinaus erhöht wird. Dies ist umso unerwarteter als die mechanischen Eigenschaften, insbesondere die Härte der Schicht, bei einer solchen Steigerung des Chromgehaltes erfahrungsgemäss nicht mehr merklich beeinflusst werden. Die Erfindung brachte jedoch die Erkenntnis, dass sich bei geeigneter Abstimmung verschiedener Legierungselemente aufeinander die Diffusion des Chroms an die Oberfläche der aufgebrachten Schicht verbessern lässt und damit die Temperaturbelastbarkeit bis auf 900°C hinaufgesetzt werden kann.

Es sind zwar gemäss der Veröffentlichung "Automatic Welding", Jahrgang 30, Nr. 5, Mai 1977, Seiten 30-32. bereits Versuche mit Ni - Cr - Fe - B - Si - Legierungen angestellt worden, die einen Chromgehalt bis zu 28 Gewichtsprozent aufwiesen, um eine optimale Zusammensetzung einer Legierung zum Plasmaauftragsschweissen im Hinblick auf Härte, Korrosionsfestigkeit und Temperaturbelastbarkeit zu ermitteln. Dabei wurde als optimal eine Legierung mit einem Borgehalt von $0,9 \pm 0,2$ bei einem Siliziumgehalt von $4,9 \pm 0,3$ Gewichtsprozent gewählt.

Wesentlich für die vorliegende Legierung sind dagegen die angegebenen Mengen von Bor und Silizium und deren Verhältnis. Die Elemente Kohlenstoff, Niob, Eisen und Molydän beeinflussen die Diffusionsgeschwindigkeit des Chroms in einer aus der erfindungsgemässen Legierung hergestellten Schutzschicht. Für den Eisenanteil der Legierung kommen die beiden Teilbereiche von 0,1-1,5 und 6-25 Gewichtsprozent in Betracht.

Auch für den Kohlenstoffgehalt erweisen sich ein niedrigerer und eine höherer Teilbereich als besonders vorteilhaft.

Die Patentansprüche 2-6 geben dementsprechend bevorzugte Zusammensetzungen des erfindungsgemässen Spritzwerkstoffes an.

Aus diesen Zusammensetzungen geht hervor, dass insbesondere bei einem Eisengehalt von über 6 % der Molybdänzusatz im unteren Bereich, d.h. unterhalb 7 % liegen soll. Ist hingegen ein hoher Molybdängehalt erwünscht, so soll der Eisenanteil gering ein, d.h. unterhalb 1,5 % liegen.

In der folgenden Tabelle werden einige Beispiele von Legierungszusammensetzungen für den erfindungsgemässen Spritzwerkstoff angegeben und dazu jeweils die entsprechende Temperaturbelastbarkeit $T_{Dmax}$ im Dauerbetrieb angeführt. Die Zusammensetzung gilt in Gewichtsprozent.

**Tabelle**

| Zu-sammen-setzung / Legierung Nr. | 1 | 2 | 3 | 4 |
|---|---|---|---|---|
| C | 0,2 | 0,5 | 0,2 | 0,5 |
| Fe | 0,5 | 1 | 7 | 9 |
| B | 3,2 | 3 | 1,8 | 2,1 |
| Si | 4,1 | 4 | 2,5 | 2,9 |
| Cr | 20 | 24 | 26 | 25 |
| Mo | - | - | 4 | 2 |
| $N_b$ | - | 0,2 | - | 0,1 |
| $T_{Dmax}$ | 750°--800°C | 750°--800°C | 800°--850°C | 800°--850°C |

Die Auswahl einer bestimmten Legierungszusammensetzung erfolgt ferner im Rahmen der angegebenen Grenzen im Hinblick auf die gewünschte Härte und auf die Art der vorgesehenen Korrosionsbelastung.

**Patentansprüche**

1. Pulverförmiger, eine selbstfliessende Legierung auf Nickel-Chrom-Basis aufweisender Spritzwerkstoff zur Herstellung von erosions-, korrosions- und oxydationsbeständigen Schutzschichten durch thermisches Spritzen und Einschmelzen mit folgender Legierungszusammensetzung in Gew.%:
   C 0,01 - 2,0
   Fe 0,1 - 25,0 mit Ausnahme des Bereiches von
   1,5-6
   B 0,5 - 4,5
   Si 0,6 - 5,5
   Cr 20,0 - 28,0
   Nb bis zu 2,0
   Mo bis zu 15,0
   Ni Rest,
   wobei der Borgehalt, mit einer maximalen Abweichung von ± 10%, jeweils 75% des Siliziumgehaltes beträgt.

2. Spritzwerkstoff nach Patentanspruch 1, dadurch gekennzeichnet, dass der Eisengehalt zwischen 6.0 und 20,0 Gewichtsprozent liegt und dass der Molybdängehalt zwischen 0,5 und 7,0 Gewichtsprozent liegt.

3. Spritzwerkstoff nach Patentanspruch 1, dadurch gekennzeichnet, dass der Eisengehalt zwischen 0,5 und 1,5 Gewichtsprozent liegt und dass der Molybdängehalt zwischen 9,0 und 14,0 Gewichtsprozent liegt.

4. Spritzwerkstoff nach einem der vorhergehenden Patentansprüche, dadurch gekennzeichnet, dass der Kohlenstoffgehalt zwischen 0,01 und 0,3 Gewichtsprozent liegt.

5. Spritzwerkstoff nach Patentanspruch 1, dadurch gekennzeichnet, dass der Kohlenstoffgehalt zwischen 0,5 und 1,5 Gewichtsprozent liegt und dass der Niobgehalt zwischen 0,1 und 1,0 Gewichtsprozent liegt.

6. Spritzwerkstoff nach Patentanspruch 1, dadurch gekennzeichnet, dass der Siliziumgehalt zwischen 1,8 und 4,5 Gewichtsprozent liegt.

## Revendications

1. Matériau de pulvérisation pulvérulent, comprenant un alliage auto-fondant à base de nickel-chrome, pour la production de couches protectrices résistant à l'érosion, la corrosion et l'oxydation, par pulverisation thermique et mise en fusion, avec la composition d'alliage suivante, en pourcentage pondéral:
   C 0,01 - 2,0
   Fe 0,1 - 25,0 à l'exception du domaine de 1,5 - 6
   B 0,5 - 4,5
   Si 0,6 - 5,5
   Cr 20,0 - 28,0
   Nb jusqu'à 2,0
   Mo jusqu'à 15,0
   Ni reste,
   dans laquelle la teneur en bore s'établit à 75% de la teneur respective en silicium, avec une déviation maximale de 10%.

2. Matériau de pulvérisation selon la revendication 1, caractérisé en ce que la teneur en fer est comprise entre 6,0 et 20,0 pourcent, en poids, et en ce que la teneur en molybdene est comprise entre 0,5 et 7,0 pourcent, en poids.

3. Matériau de pulvérisation selon la revendication 1, caractérisé en ce que la teneur en fer est comprise entre 0,5 et 1,5 pourcent, en poids, et en ce que la teneur en molybdène est comprise entre 9,0 et 14,0 pourcent, en poids.

4. Matériau de pulvérisation selon l'une des revendications précédentes, caractérisé en ce que la teneur en carbone est comprise entre 0,01 et 0,3 pourcent, en poids.

5. Matériau de pulvérisation selon la revendication 1, caractérisé en ce que la teneur en carbone est comprise entre 0,5 et 1,5 pourcent, en poids, et en ce que la teneur en niobium est comprise entre 0,1 et 1,0 pourcent, en poids.

6. Matériau de pulverisation selon la revendication 1, caractérisé en ce que la teneur en silicium est comprise entre 1,8 et 4,5 pourcent, en poids.

## Claims

1. A powdered spraying material for producing, by thermal spraying and fusing, protective coatings resistant to erosion, corrosion and oxidation, said material comprising a self-fluxing nickel-chromium-based alloy, with the following alloy composition, in percent by weight:
   C 0.01 - 2,0
   Fe 0.1 - 25.0 except the range of 1.5 - 6
   B 0.5 - 4.5
   Si 0.6 - 5.5
   Cr 20.0 - 28.0
   Nb up to 2.0
   Mo up to 15.0

Ni remainder,

the boron content being equal to 75 percent of the respective silicon content, with a maximum deviation of 10 percent.

2. A spraying material as claimed in claim 1, characterized in that the iron content is comprised between 6.0 and 20.0 percent by weight and in that the molybdenum content is comprised between 0.5 and 7.0 percent by weight.

3. A spraying material as claimed in claim 1, characterized in that the iron content is comprised between 0.5 and 1.5 percent by weight and in that the molybdenum content is comprised between 9.0 and 14.0 percent by weight.

4. A spraying material as claimed in any of the preceding claims, characterized in that the carbon content is comprised between 0.01 and 0.3 percent by weight.

5. A spraying material as claimed in claim 1, characterized in that the carbon content is comprised between 0.5 and 1.5 percent by weight and in that the niobium content is comprised between 0.1 and 1.0 percent by weight.

6. A spraying material as claimed in claim 1, characterized in that the silicon content is comprised between 1.8 and 4.5 percent by weight.